Europäisches Patentamt

European Patent Office

Office européen des brevets

(11) Publication number: **0 462 288 A1**

# EUROPEAN PATENT APPLICATION
## published in accordance with Art. 158(3) EPC

(21) Application number: 91901629.5

(22) Date of filing: 27.12.90

(86) International application number:
PCT/JP90/01717

(87) International publication number:
WO 91/09817 (11.07.91 91/15)

(51) Int. Cl.⁵: **C04B 38/00**, C04B 38/06,
C04B 35/52, C01B 31/02

(30) Priority: 29.12.89 JP 343037/89

(43) Date of publication of application:
27.12.91 Bulletin 91/52

(84) Designated Contracting States:
DE FR GB IT SE

(71) Applicant: NIPPON STEEL CHEMICAL CO.,
LTD.
13-16 Ginza 5-chome Chuo-ku
Tokyo(JP)
(84) DE FR GB IT SE

Applicant: NIPPON STEEL CORPORATION
6-3 Otemachi 2-chome Chiyoda-ku
Tokyo 100(JP)
(84) DE FR GB IT SE

(72) Inventor: YAMASAKI, Shingo 7-7-104, Nakai
4-chome
Kokurakita-ku
Kitakyushu-shi Fukuoka-ken 803(JP)
Inventor: SAITOU, Nobushige 4-3-204, Nakai
2-chome
Kokurakita-ku
Kitakyushu-shi Fukuoka-ken 803(JP)
Inventor: HOTTA, Katsumi 586-10, Ouaza
Tsuchiana
Munakata-shi
Fukuoka-ken 811-41(JP)
Inventor: TAKEHARA, Masaharu 4-4-405, Nakai
2-chome
Kokurakita-ku
Kitakyushu-shi Fukuoka-ken 803(JP)

(74) Representative: Holmes, Michael John et al
Frank B. Dehn & Co. Imperial House 15-19
Kingsway
London WC2B 6UZ(GB)

(54) PROCESS FOR PRODUCING POROUS CARBONACEOUS MATERIAL.

(57) A process for producing isotropic porous carbonaceous material which little causes cracking in the production step, is excellent in strengths, and is isotropic in strengths, thermal conductivity, etc., said process comprising carbonizing or graphitizing a nearly spherical, open-cellular phenolic resin foam which has a mean cell diameter of 1 to 300 μm and a content of each of cells having a diameter of at most one half of the mean cell diameter and cells having a diameter of at least a double of the mean cell diameter of 10 % or above.

EP 0 462 288 A1

Field of Technology

This invention relates to a process for preparing lightweight porous carbonaceous materials.

Background Technology

Porous carbonaceous materials obtained by foaming phenolic resins or compositions containing phenolic resins and carbonizing or graphitizing the resulting cellular phenolic resins are used as heat-resistant thermal insulators, structural materials, adsorbents, catalyst carriers, and the like. Processes for the preparation of such porous carbonaceous materials are disclosed, for example, in Japan Kokai Tokkyo Koho No. 1-197,376 (1989), U.S. Patent 3,121,050, and U.S. Patent 3,342,555. According to these processes, porous carbonaceous materials are produced by carbonizing or graphitizing relatively uniform cellular phenolic resins.

Cellular phenolic resins, however, tend to crack during heating and carbonization as their good thermal insulation property produces a large difference in temperature between inside and outside. Moreover, the porous carbonaceous materials thereby obtained are often anisotropic in strength and thermal conductivity and are hence not easy to use.

Disclosure of the Invention

It is an object of this invention to provide a process for preparing porous carbonaceous materials with minimal cracking in the manufacturing step.

Another object of this invention is to provide a process for preparing porous carbonaceous materials which possess excellent strength and show isotropy in strength and thermal conductivity.

This invention relates to a process for preparing isotropic porous carbonaceous materials which comprises carbonizing or graphitizing cellular phenolic resins having roughly spherical open cells with an average cell diameter of 1 to 300 $\mu$m, 10% or more of said cells having a diameter 1/2 or less than 1/2 of the average cell diameter and another 10% or more of said cells having a diameter twice or more than twice the average cell diameter.

Cellular phenolic resins are obtained by foaming and curing phenolic resins containing a blowing agent such as flon gas (a generic name for chlorofluorocarbons and chlorofluorohydrocarbons in Japan), methylene chloride, and water. Phenolic resins obtained by condensing a phenolic compound such as phenol, cresol, xylenol, and resorcinol or a mixture thereof with formalin are satisfactory here and they may be either resol or novolak. They are preferably resols with a number average molecular weight of 200 to 300 and a viscosity of 1,000 to 10,000 centipoises at 25 °C and, more preferably, resols with a number average molecular weight of 200 to 300 and a viscosity of 1,000 to 3,000 centipoises at 25 °C prepared by reacting 1 mole of phenol with 1.4 to 1.6 moles of formaldehyde in the presence of an alkali catalyst followed by neutralization and removal of water. Moreover, it is desirable for such resols to contain 15 to 25% by weight, preferably 15 to 18% by weight, of water and show an acid cure period (that is, cure period of resol in admixture with 10% of its weight of 50% p-toluenesulfonic acid at 23 °C) of 15 to 20 minutes. The phenolic resins thus prepared are mixed with a blowing agent and an acid curing agent and foamed and cured to yield cellular phenolic resins by a known process.

The process of this invention yields foam cells having an average cell diameter of 1 to 300 $\mu$m, preferably 50 to 300 $\mu$m, with the content of cells having a diameter of 1/2 or less than 1/2 of the average cell diameter controlled at 10% or more and the content of cells having a diameter of twice or more than twice of the average cell diameter controlled at 10% or more. That is, the proportions of cells having a diameter of 1/2 or less than 1/2 of the average cell diameter and of those having a diameter of twice or more than twice of the average cell diameter are each controlled at 10% or more, preferably 10 to 30%, of the total cells in a given volume. Moreover, it is desirable to broaden the cell diameter distribution so that the standard deviation designating the cell diameter distribution becomes 30 $\mu$m or more. The shape of the cells is made roughly spherical. Cells of uniform diameter tend not only to facilitate cracking during carbonization but also to lower the strength of the carbonaceous materials produced. An adequate mixture of large and small cells prevents cracking and increases the strength. Flat cells tend to cause anisotropy in the strength, thermal conductivity, and the like. The distribution of cell diameter may be broadened by addition of a blowing agent in large quantities or by nonuniform foaming through nonuniform mixing of a blowing agent. The shape of the cells can be controlled by adjusting the viscosity of phenolic resins. A person with a general knowledge of cellular plastics will be able to determine the foaming conditions after preliminary experimental runs.

2

The compounds useful as blowing agents are low-boiling halohydrocarbons, hydrocarbons, and ethers and those halohydrocarbons and aliphatic hydrocarbons which boil in the range from ambient temperature to 80°C, for example, flon gas and n-pentane, are preferable. The compounds useful as curing agents include aromatic sulfonic acids, sulfuric acid, and phosphoric acid. In addition, surfactants and catalysts such as amines may be used as needed. The foaming and curing are preferably carried out in the manner of free expansion at a temperature in the range of ambient temperature to 60°C for a period of 10 to 100 minutes.

The cellular phenolic resins are fabricated into a desired shape if necessary and then submitted to carbonization or graphitization. Carbonization normally begins in the vicinity of 400°C and ends in the vicinity of 1,000°C and the cellular phenolic resins are completely carbonized by heating them in an atmosphere of nonoxidizing gas in an electric oven or a combustion furnace at or above 1,000°C to yield carbonaceous materials. Graphitization further increases the resistance to oxidation and the strength and, whenever this treatment is required, the carbonized materials are additionally heated at 2,000°C to 3,000°C. The temperature is raised at a rate of 5 to 20°C/hr. up to approximately 1,000°C where the carbonization is completed and then at a rate of 50 to 200°C/hr. for graphitization. It is allowable to cool the materials after completion of the carbonizatin and then freshly graphitize them at 2,000°C, but a continuation from carbonization to graphitization without intermediate cooling enhances the efficiency of thermal energy utilization.

The cellular phenolic resins shrink when carbonized and the process of this invention causes this shrinkage to occur uniformly in every direction with retention of the similarity in whole and prevents cracking. The carbonaceous materials produced are isotropic and porous and they are roughly the same in cell diameter distribution and the like as the cellular phenolic resins except for the contraction in length of 20 to 30%. It is desirable to control the average cell diameter of the isotropic porous carbonaceous materials at 40 to 270 $\mu$ m.

Detailed Description of the Preferred Embodiments

This invention will be explained in detail with reference to the accompanying examples and comparative example.

Example 1

A mixture of 100 parts by weight of phenol, 101.8 parts by weight of 47% aqueous formaldehyde, and 3.3 parts by weight of 50% NaOH at a phenol to formaldehyde mole ratio of 1.5 was reacted at 100°C for 1 hour and the reaction mixture was neutralized to pH 7 and stripped of the water under reduced pressure until the water content became 17.4% by weight to yield a resol with a viscosity of 1,650 centipoises and an acid cure period of 18 minutes. The resol showed a number average molecular weight of 267 as determined by gel permeation chromatography (GPC).

A mixture of 100 parts by weight of the resol, 3 parts by weight of a surfactant, 6 parts by weight of a flon gas blowing agent, and 15 parts by weight of a sulfonic acid-based curing agent was poured into a top-open mold and held there at 60°C for 45 minutes to allow the mixture to foam and cure. A section of the resulting cellular phenolic resin with a bulk density of 0.105, photographed and enlarged, indicated that the cells are roughly spherical and interconnected and distributed in diameter as shown in Table 1.

The cellular material was then introduced into an electric furnace and completely carbonized by heating it up to 1,100°C in an atmosphere of nitrogen gas. It shrank approximately 20% in each direction but the resulting porous carbonaceous material with a bulk density of 0.089 was free of cracks.

The carbonaceous material showed a flexural strength of 7.1 kg/cm$^2$ and a compressive strength of 12.8 kg/cm$^2$ and the ratio of the strength in the thickness direction to that in the transverse direction was 1.2 for the former and 1.0 for the latter.

This carbonaceous material was graphitized by heating it to 2,600°C. The resulting porous material with a bulk density (g/cm$^3$) of 0.102 showed a little shrinkage but no cracking. Its properties are as follows:

Thermal conductivity (kcal/m. hr. °C)

      (Nonsteady state, 1,300 °C)         0.25

      (Steady state, 2,000 °C)         0.34

Flexural strength (kg/cm$^2$)         10

Compressive strength (kg/cm$^2$)         18

Ash content (wt.%)         <0.01

Coefficient of thermal expansion (/10$^6$°C)     2.17

Confirmation of isotropy

      (as ratio of a given property in thickness direction

      to that in transverse direction)

Thermal conductivity         1.00

Specific resistance         1.00

Flexural strength         1.0

Compressive strength         1.0

Example 2

A graphitized porous carbonaceous material with a bulk density of 0.13 was obtained in the manner described in Example 1. No cracking was observed here. The material was tested for its isotropy. The flexural test was conducted on a rectangular prism (100 × 20 × 10 mm) and the compressive test on a cube (30 × 30 × 30 mm) in the thickness direction and the transverse direction. The flexural strength (kg/mm$^2$) was 0.12 in the thickness direction and 0.12 in the transverse direction while the compressive strength (kg/mm$^2$) was 0.17 in the thickness direction and 0.16 in the transverse direction.

Comparative Example 1

The experiment was carried out as in Example 1 except using 4 parts by weight of the blowing agent. The cells in the cellular phenolic resin were interconnected and distributed in their diameter as shown in Table 1. The cellular specimen had a bulk density of 0.099 and was carbonized at 1,100 °C with roughly the same degree of shrinkage as in Example 1 to a bulk density of 0.098 but with extensive cracking.

4

Table 1

| Cell diameter ($\mu$m) | Example 1 | Comparative Example 1 |
|---|---|---|
| 0 ~ 50 | 20% | 0% |
| ~ 100 | 41 | 11 |
| ~ 150 | 25 | 58 |
| ~ 200 | 5 | 31 |
| ~ 250 | 4 | 0 |
| ~ 300 | 5 | 0 |

Industrial Applicability

The porous carbonaceous materials produced by the process of this invention are lightweight and heat-resistant and are applicable as heat-resistant materials to high-temperature furnaces and to the space and aircraft industries.

The process of this invention effectively prevents cracking during the manufacturing step and raises the productivity.

**Claims**

1. A process for preparing isotropic porous carbonaceous materials which comprises carbonizing or graphitizing cellular phenolic resins having roughly spherical open cells with an average cell diameter of 1 to 300 $\mu$m, 10% or more of said cells having a diameter of 1/2 or less than 1/2 of said average cell diameter and another 10% or more of said cells having a diameter of twice or more than twice said average cell diameter.

2. A process for preparing isotropic porous carbonaceous materials according to claim 1 wherein cellular phenolic resins with an average cell diameter of 50 to 300 $\mu$m are carbonized to isotropic porous carboneceous materials with an average cell diameter of 35 to 210$\mu$m.

3. A process for preparing isotropic porous carbonaceous materials which comprises a step for the production of resol resins with a number average molecular weight of 200 to 300 and a viscosity of 1,000 to 10,000 centipoises at 25 °C by the reaction of 1 mole of phenol with 1.4 to 1.6 moles of formaldehyde in the presence of an alkali catalyst followed by neutralization and removal of water, a step for the production of cellular phenolic resins having roughly spherical open cells with an average cell diameter of 1 to 300 $\mu$m, 10% or more of said cells having a diameter of 1/2 or less than 1/2 of said average cell diameter and another 10% or more of said cells having a diameter of twice or more than twice said average cell diameter, by mixing said resol resins with a blowing agent and an acid curing agent and foaming and curing the resulting mixture, and a step for the carbonization or graphitization of said cellular phenolic resins in an atmosphere of nonoxidizing gas at or above 1,000 °C.

4. A process for preparing isotropic porous carbonaceous materials according to claim 3 wherein said carbonization is conducted at or above 1,000 °C followed by graphitization at 2,000 to 3,000 °C.

5. A process for preparing isotropic porous carbonaceous materials according to claim 3 wherein said carbonization is conducted by raising the temperature at a rate of 5 to 20 °C/hr. up to approximately 1,000 °C and then at a rate of 50 to 200 °C/hr. up to or above 2,000 °C.

# INTERNATIONAL SEARCH REPORT

International Application No PCT/JP90/01717

## I. CLASSIFICATION OF SUBJECT MATTER (if several classification symbols apply, indicate all) ⁶

According to International Patent Classification (IPC) or to both National Classification and IPC

Int. Cl⁵   C04B38/00, 38/06, 35/52, C01B31/02

## II. FIELDS SEARCHED

### Minimum Documentation Searched ⁷

| Classification System | Classification Symbols |
|---|---|
| IPC | C04B38/06, C01B31/02 |

### Documentation Searched other than Minimum Documentation to the Extent that such Documents are Included in the Fields Searched ⁸

## III. DOCUMENTS CONSIDERED TO BE RELEVANT ⁹

| Category* | Citation of Document, ¹¹ with indication, where appropriate, of the relevant passages ¹² | Relevant to Claim No. ¹³ |
|---|---|---|
| X | JP, A, 62-132714 (Koseino Jushi Shin Seizo Gijutsu Kenkyu Kumiai), June 16, 1987 (16. 06. 87), (Family: none) | 1-5 |
| X | JP, A, 62-132715 (Koseino Jushi Shin Seizo Gijutsu Kenkyu Kumiai), June 16, 1987 (16. 06. 87), (Family: none) | 1-5 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family.

## IV. CERTIFICATION

| Date of the Actual Completion of the International Search | Date of Mailing of this International Search Report |
|---|---|
| March 18, 1991 (18. 03. 91) | April 1, 1991 (01. 04. 91) |

| International Searching Authority | Signature of Authorized Officer |
|---|---|
| Japanese Patent Office | |

Form PCT/ISA/210 (second sheet) (January 1985)